# EUROPEAN PATENT APPLICATION

(11) **EP 2 711 256 A1**
(43) Date of publication of application: **26.03.2014**
(21) Application number: 12786403.1
(22) Date of filing: 14.05.2012
(51) Int. Cl.: B60T 8/17, B60T 7/06, B60T 11/18

(54) **STROKE SIMULATOR, MASTER CYLINDER HAVING SAME, AND BRAKE SYSTEM USING MASTER CYLINDER**

(30) Priority: 16.05.2011 JP 2011109507
(71) Applicant: Robert Bosch GmbH, 70442 Stuttgart (DE)
(72) Inventor: CHIBA, Shuusaku, Hiki-gun, Saitama 355-0813 (JP); UCHIDA, Naoshi, Hiki-gun, Saitama 355-0813 (JP)
(74) Representative: DREISS Patentanwälte PartG mbB
(86) International application number: PCT/JP2012/062302
(87) International publication number: WO 2012/157609

(57) **Abstract**

[Problem] To more smoothly commence actuation of a stroke simulation function.

[Means for Resolution] A pedal feel simulator unit 3 of a master cylinder 1 has a start-up load reducing unit 28, and this start-up load reducing unit 28 has a start-up load reducing spring 29. The elastic modulus of the start-up load reducing spring 29 is set smaller than the elastic modulus of a simulator actuation piston return spring 16. Consequently, when the start-up load reducing spring 29 is pressed by an input shaft 4, the start-up load reducing spring 29 starts to elastically flex before the simulator actuation piston return spring 16 elastically flexes and a simulator actuation piston 14 starts to move forward. Because of this, the start-up load of the pedal feel simulator unit 3 is reduced.

## Description

### Technical Field

The present invention relates to the technical field of a stroke simulator that generates a reaction force corresponding to the depression of a pedal used in a brake system or the like, the technical field of a master cylinder having this stroke simulator, and the technical field of a brake system using this master cylinder. In the description of the specification of the present invention, the relationship between front and rear directions will be such that "front" means the direction in which an input shaft moves when a brake pedal is depressed and "rear" means the direction in which the input shaft returns when the brake pedal is released.

### Background Art

The development of hybrid cars and electric automobiles is advancing in relation to automobiles such as passenger cars. In accompaniment with this, a variety of cooperative regenerative braking systems, in which regenerative brakes and friction brakes are cooperatively used, are being developed in relation to brake systems for automobiles. These cooperative regenerative braking systems detect the depression stroke of the brake pedal, a control unit (Electric control unit: ECU) computes the braking force resulting from the regenerative brakes and the braking force resulting from the friction brakes on the basis of the detected stroke, and brakes are applied to the automobile using the computed braking forces.

In such cooperative regenerative braking systems, the control unit decides the braking forces on the basis of the depression stroke of the brake pedal, so a reaction force corresponding to the depression stroke of the brake pedal is not transmitted to the driver. Therefore, in order to make it possible for the driver to perceive a reaction force corresponding to the depression stroke of the brake pedal, a master cylinder having a pedal feel simulator unit has been proposed (e.g., see PTL 1).

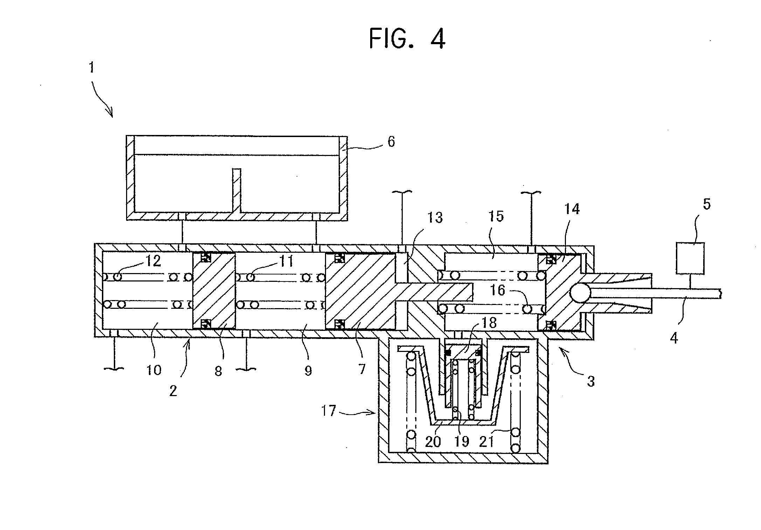

FIG. 4 is a drawing schematically showing the master cylinder having the pedal feel simulator unit described in PTL 1. In the drawing, 1 is a master cylinder, 2 is a tandem master cylinder unit that generates brake hydraulic pressure for friction brakes, 3 is a pedal feel simulator unit (stroke simulator) that is integrally disposed in the tandem master cylinder unit 2, 4 is an input shaft that performs a stroke in accordance with the depression of a brake pedal (not shown in FIG. 4), 5 is a stroke sensor that detects the stroke of the input shaft 4, and 6 is a reservoir tank that holds brake fluid.

The tandem master cylinder unit 2 has, like a conventionally well-known tandem master cylinder, a primary piston 7, a secondary piston 8, a primary hydraulic chamber 9 that is defined by the primary piston 7 and the secondary piston 8, a secondary hydraulic chamber 10 that is defined by the secondary piston 8, a primary spring 11 that always biases the primary piston 7 toward a non-actuated position, and a secondary spring 12 that always biases the secondary piston 8 toward a non-actuated position. The primary hydraulic chamber 9 is connected to brake cylinders of one brake system (not shown in FIG. 4) and is also communicatively connected to the reservoir tank 6 in the non-actuated position of the primary piston 7 shown in the drawing. Additionally, when the primary piston 7 moves forward, the primary hydraulic chamber 9 becomes cut off from the reservoir tank 6 and brake hydraulic pressure is generated in the primary hydraulic chamber 9. The secondary hydraulic chamber 10 is connected to brake cylinders of another brake system (not shown in FIG. 4) and is also communicatively connected to the reservoir tank 6 in the non-actuated position of the secondary piston 8 shown in the drawing. Additionally, when the secondary piston 8 moves forward, the secondary hydraulic chamber 10 becomes cut off from the reservoir tank 6 and brake hydraulic pressure is generated in the secondary hydraulic chamber 10.

Moreover, the tandem master cylinder unit 2 has a power chamber 13 between the primary piston 7 and a cylinder wall. Hydraulic fluid is supplied to this power chamber 13 from an unillustrated power source at the time of brake actuation. In that case, the hydraulic fluid is supplied in such a way that the hydraulic pressure in the power chamber 13 becomes a hydraulic pressure corresponding to the braking force resulting from the friction brakes computed by the control unit.

The pedal feel simulator unit 3 has a simulator actuation piston 14 that is actuated by the input shaft 4, a simulator actuation hydraulic chamber 15 in which simulator actuation hydraulic pressure is generated by the actuation of the simulator actuation piston 14, a simulator actuation piston return spring 16 comprising a coil spring that always biases the simulator actuation piston 14 toward a non-actuated position, and a pedal feel simulator cartridge 17. Further, the pedal feel simulator cartridge 17 has a first reaction force simulator piston 18 (which corresponds to a reaction force simulator member of the present invention) on which the simulator actuation hydraulic pressure in the simulator actuation hydraulic chamber 15 acts, a first reaction force simulator spring 19 (which corresponds to the reaction force simulator member of the present invention) that always biases the first reaction force simulator piston 18 toward a non-actuated position, a second reaction force simulator piston 20 (which corresponds to the reaction force simulator member of the present invention) that supports the first reaction force simulator spring 19, and a second reaction force simulator spring 21 (which corresponds to the reaction force simulator member of the present invention) that always biases the second reaction force simulator piston 20 toward a non-actuated position.

In this pedal feel simulator unit 3, during non-actuation when the brake pedal is not depressed, the simulator actuation piston 14 is in the non-actuated position shown in FIG. 4. In this state, the simulator actuation hydraulic chamber 15 is communicatively connected to the reservoir tank 6, and the inside of the simulator actuation hydraulic chamber 15 is at atmospheric pressure without simulator actuation hydraulic pressure being generated. Consequently, the first reaction force simulator piston 18 and the second reaction force simulator piston 20 are in the non-actuated positions shown in FIG. 4.

Then, when the brake pedal is depressed, the input shaft 4 moves forward (moves to the left in FIG. 4), so the simulator actuation piston 14 moves forward (is actuated) while causing the simulator actuation piston return spring 16 to elastically flex. When the simulator actuation hydraulic chamber 15 becomes cut off from the reservoir tank 6 by the actuation of the simulator actuation piston 14, simulator actuation hydraulic pressure is generated inside the simulator actuation hydraulic chamber 15. This simulator actuation hydraulic pressure acts on the first reaction force simulator piston 18. When the simulator actuation hydraulic pressure increases to a predetermined hydraulic pressure, because of this simulator actuation hydraulic pressure, the first reaction force simulator piston 18 moves (is actuated) downward in FIG. 4 while pressing and causing the first reaction force simulator spring 19 to elastically flex, and because of the pressing force of the first reaction force simulator piston 18, the second reaction force simulator piston 20 moves (is actuated) downward in FIG. 4 while causing the second reaction force simulator spring 21 to flex. Because of this, forces corresponding to the amounts the first and second reaction force simulator springs 19 and 21 flex act as reaction forces on the first reaction force simulator piston 18.

Then, when the force acting on the first reaction force simulator piston 18 resulting from the simulator actuation hydraulic pressure and the force acting on the first reaction force simulator piston 18 resulting from the first reaction force simulator spring 19 balance one another out, the movement of the first and second reaction force simulator pistons 18 and 20 stops. At this time, the simulator actuation hydraulic pressure inside the simulator actuation hydraulic chamber 15 becomes a hydraulic pressure corresponding to the depression stroke of the brake pedal. Then, the reaction force of the first reaction force simulator piston 18 is converted to simulator actuation hydraulic pressure and acts on the simulator actuation piston 14, and the reaction force is transmitted from the simulator actuation piston 14 via the input shaft 4 to the brake pedal. Because of this, the driver perceives, from the brake pedal, the reaction force corresponding to the depression stroke of the brake pedal.

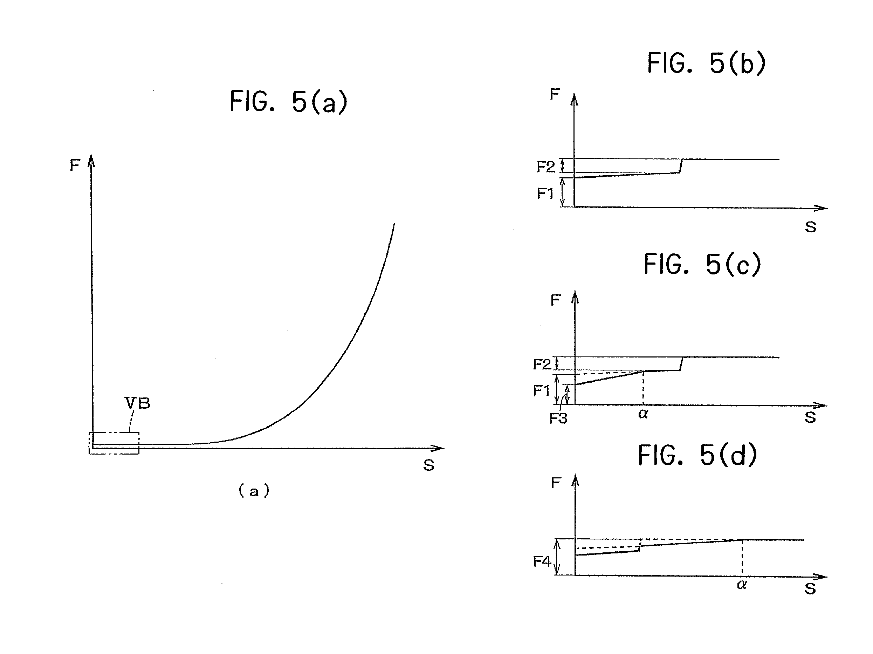

The pedal feel characteristic diagram in the pedal feel simulator unit 3 configured in this way (in other words, the characteristic diagram of the reaction force F with respect to the stroke S of the brake pedal) becomes the characteristic diagram shown in FIG. 5(a). That is, the pedal feel characteristic diagram draws a characteristic curve that is curved in such a way that the reaction force F is relatively small with respect to the increase in the stroke S during the initial period of actuation of the pedal feel simulator unit 3 and, when the stroke S becomes a predetermined amount larger, the reaction force F becomes relatively larger with respect to the increase in the stroke S.

In this master cylinder 1, during non-actuation when the brake pedal is not depressed, the tandem master cylinder unit 2 and the pedal feel simulator unit 3 are both in the non-actuated state shown in FIG. 4. That is, the hydraulic fluid is not supplied from the power source to the power chamber 13, and the primary piston 7 and the secondary piston 8 are both in the non-actuated positions shown in FIG. 4. Consequently, the primary hydraulic chamber 9 and the secondary hydraulic chamber 10 are both communicatively connected to the reservoir tank 6, and brake hydraulic pressures are not generated inside the primary hydraulic chamber 9 and the secondary hydraulic chamber 10. Further, the simulator actuation hydraulic chamber 15 is communicatively connected to the reservoir tank 6, and simulator actuation hydraulic pressure is not generated inside the simulator actuation hydraulic chamber 15.

Further, when the brake pedal is depressed, the input shaft 4 performs a forward stroke. This stroke of the input shaft 4 is detected by the stroke sensor 5. An unillustrated control unit controls the driving of the power source on the basis of the stroke of the input shaft 4 from the stroke sensor 5 (in other words, the depression stroke of the brake pedal). Because of this, the hydraulic fluid is supplied from the power source to the power chamber 13, and the primary piston 7 and the secondary piston 8 move forward. When this happens, the primary hydraulic chamber 9 and the secondary hydraulic chamber 10 both become cut off from the reservoir tank 6, and brake hydraulic pressures are generated inside the primary hydraulic chamber 9 and the secondary hydraulic chamber 10. These brake hydraulic pressures are supplied to the corresponding brake cylinders of the two systems, and brakes are applied to the corresponding wheels of the automobile.

When the actuation hydraulic pressure inside the power chamber 13 becomes a hydraulic pressure corresponding to the depression stroke of the brake pedal, the control unit stops the power source. When this happens, the primary piston 7 and the secondary piston 8 both stop, and the brake hydraulic pressures inside the primary hydraulic chamber 9 and the secondary hydraulic chamber 10 both become hydraulic pressures corresponding to the depression stroke of the brake pedal. That is, brakes are applied to the wheels using braking forces corresponding to the depression stroke of the brake pedal.

At this time, as described above, the pedal feel simulator unit 3 transmits to the brake pedal the reaction force corresponding to the depression stroke of the brake pedal. Consequently, the driver perceives this reaction force and senses that brakes are being applied to the wheels using braking forces corresponding to the depression stroke of the brake pedal.

When the brake pedal is released, the input shaft 4 performs a rearward stroke (toward the non-actuated position), and this stroke of the input shaft 4 is detected by the stroke sensor 5. The control unit controls an unillustrated control valve on the basis of the stroke detected by the stroke sensor 5 to discharge the hydraulic fluid inside the power chamber 13 to the reservoir tank 6. Because of this, the hydraulic pressure inside the power chamber 13 drops, and the primary piston 7 and the secondary piston 8 move rearward because of the biasing forces of the primary spring 11 and the secondary spring 12, respectively. When the hydraulic pressure inside the power chamber 13 becomes atmospheric pressure, the primary piston 7 and the secondary piston 8 both move to the non-actuated positions shown in FIG. 4, and the braking of the wheels is released.

When the input shaft 4 performs the rearward stroke, the simulator actuation piston 14 moves rearward because of the biasing force of the simulator actuation piston return spring 16. Then, when the simulator actuation piston 14 reaches the neighborhood of the non-actuated position, the simulator actuation hydraulic chamber 15 becomes communicatively connected to the reservoir tank 6 and the simulator actuation hydraulic pressure inside the simulator actuation hydraulic chamber 15 drops. In the state in which the simulator actuation piston 14 has reached the non-actuated position shown in FIG. 4, the hydraulic pressure in the simulator actuation hydraulic chamber 15 becomes atmospheric pressure. Because of this, the first reaction force simulator piston 18 and the second reaction force simulator piston 20 both move to the non-actuated positions shown in FIG. 4. The terms and reference signs used for the constituent elements herein are not the same terms and reference signs as those described in PTL 1.

### Citation List

### Patent Literature

PTL 1: Japanese Patent No. 4,510,388

### Summary of Invention

### Technical Problem

Incidentally, the pedal feel simulator unit 3 described in PTL 1 has plural springs comprising the simulator actuation piston return spring 16, the first reaction force simulator spring 19, and the second reaction force simulator spring 21. In order for the pedal feel simulator unit 3 to start up (in order for actuation to commence), it is necessary for the simulator actuation piston 14 to be actuated. For this reason, in order for the pedal feel simulator unit 3 to start up, these plural springs must flex and the simulator actuation piston 14 must be actuated by the depression stroke of the brake pedal.

In particular, the sliding resistance of the simulator actuation piston 14 resulting from a seal works on the simulator actuation piston 14, so in order to reliably return the simulator actuation piston 14 to the non-actuated position, it is necessary to make the spring load of the simulator actuation piston return spring 16 relatively larger. For this reason, the default load of the simulator actuation piston return spring 16 is relatively large.

Consequently, when the pedal feel simulator unit 3 starts up (when actuation commences), it becomes necessary for the force with which the simulator actuation piston 14 presses the simulator actuation piston return spring 16 because of the depression force of the brake pedal to be at least a magnitude exceeding the default load of the simulator actuation piston return spring 16. That is, as shown in FIG. 5(b), in which section VB of FIG. 5 (a) is enlarged, when the pedal feel simulator unit 3 starts up, it is necessary for the pressing force (which is equivalent to the reaction force) with which the simulator actuation piston 14 presses the simulator actuation piston return spring 16 to be a magnitude exceeding force F1 at which the simulator actuation piston return spring 16 begins to flex. F2 is the force at which the first and second reaction force simulator springs 19 and 21 begin to flex.

However, if the default load of the simulator actuation piston return spring 16 is large in this way, the force F1 at which the simulator actuation piston return spring 16 begins to flex becomes larger. In other words, the start-up load of the pedal feel simulator portion 3 becomes larger. For this reason, start-up of the pedal feel simulation function resulting from the pedal feel simulator unit 3 is not smoothly performed.

The present invention has been made in view of these circumstances, and it is an object thereof to provide a stroke simulator that can more smoothly commence actuation of a stroke simulation function, a master cylinder having this stroke simulator, and a brake system using this master cylinder. Solution to Problem

In order to solve the above problem, a stroke simulator pertaining to the present invention comprises: an input shaft that is actuated as a result of an input being applied thereto; a simulator actuation piston that is actuated by the input shaft; a simulator actuation piston return spring that biases the simulator actuation piston in the direction of a non-actuated position; a reaction force simulator member that outputs a reaction force based on the input of the input shaft to the simulator actuation piston because of the actuation of the simulator actuation piston; and an actuation commencement load reducing unit that reduces a actuation commencement load at which actuation of the input shaft commences.

Further, in the stroke simulator pertaining to the present invention, the actuation commencement load reducing unit is disposed between the input shaft and the simulator actuation piston.

Moreover, in the stroke simulator pertaining to the present invention, the actuation commencement load reducing unit has an elastic member whose elastic modulus is smaller than the elastic modulus of the simulator actuation piston return spring.

Moreover, in the stroke simulator pertaining to the present invention, the elastic member is an actuation commencement load reducing spring comprising a coil spring.

Moreover, in the stroke simulator pertaining to the present invention, the elastic member is a rubber member.

Moreover, in the stroke simulator pertaining to the present invention, the elastic member is a gas sealed between the input shaft and the simulator actuation piston.

Moreover, the stroke simulator pertaining to the present invention further comprises a simulator actuation hydraulic chamber in which simulator actuation hydraulic pressure is generated by the actuation of the simulator actuation piston, wherein the reaction force simulator member has a reaction force simulator piston that is actuated as a result of the simulator actuation hydraulic pressure in the simulator actuation hydraulic chamber acting thereon and a reaction force simulator spring that is pressed by the reaction force simulator piston, flexes, and generates a reaction force.

Moreover, a master cylinder pertaining to the present invention comprises a stroke simulator that outputs a reaction force based on an input of an input shaft and a master cylinder piston that generates hydraulic pressure based on the input of the input shaft, wherein the stroke simulator is any one of the stroke simulators of the present invention described above.

Moreover, a brake system pertaining to the present invention comprises a brake pedal, a master cylinder that is actuated upon depression of the brake pedal and generates brake hydraulic pressure based on the depression of the brake pedal, and a brake cylinder that generates a braking force using the brake hydraulic pressure generated by the master cylinder, wherein the master cylinder is the master cylinder described above.

### Advantageous Effects of Invention

According to the stroke simulator pertaining to the present invention configured in this way and the master cylinder and brake system having the stroke simulator, the actuation commencement load reducing unit that reduces the actuation commencement load at which actuation of the input shaft commences is disposed. Consequently, because of this actuation commencement load reducing unit, the actuation commencement load of the stroke simulator can be reduced lower than the actuation commencement load of the conventional stroke simulator. Because of this, it becomes possible to smoothly commence actuation of the stroke simulation function resulting from the stroke simulator.

Further, the elastic modulus or default load of the actuation commencement load reducing unit can be arbitrarily set within a range smaller than that of the elastic modulus or default load of the simulator actuation piston return spring. Because of this, it becomes possible to arbitrarily set the actuation commencement load of the stroke simulator. In particular, by setting the default load of the elastic member of the actuation commencement load reducing unit to 0 (in other words, by setting the elastic member to its free length when the stroke simulator is not actuated), it becomes possible to commence actuation of the stroke simulator from the point at which the default load is 0.

Moreover, by using in the brake system the master cylinder having the stroke simulator that can smoothly commence actuation of the stroke simulation function, the braking operation of the vehicle can be performed with a good feeling. Brief Description of Drawings

FIG. 1 is a drawing schematically showing a master cylinder having an example of an embodiment of a stroke simulator pertaining to the present invention and a brake system using this master cylinder;

FIG. 2 is a partially enlarged view of section II in FIG. 1;

FIG. 3(a) is a partially enlarged view showing another example of the embodiment of the stroke simulator pertaining to the present invention, and FIG. 3 (b) is a partially enlarged view showing yet another example of the embodiment of the stroke simulator pertaining to the present invention;

FIG. 4 is a drawing schematically showing a conventional master cylinder having a pedal feel simulator unit described in PTL 1; and

FIG. 5(a) is a pedal feel characteristic diagram of the pedal feel simulator unit shown in FIG. 4, FIG. 5(b) is a partially enlarged view of section VB in FIG. 5(a), and FIG. 5(c) is a characteristic diagram of a reaction force with respect to a stroke of the stroke simulator of the example shown in FIG. 1 and FIG. 2.

### Description of Embodiments

An embodiment of the present invention will be described below using the drawings.

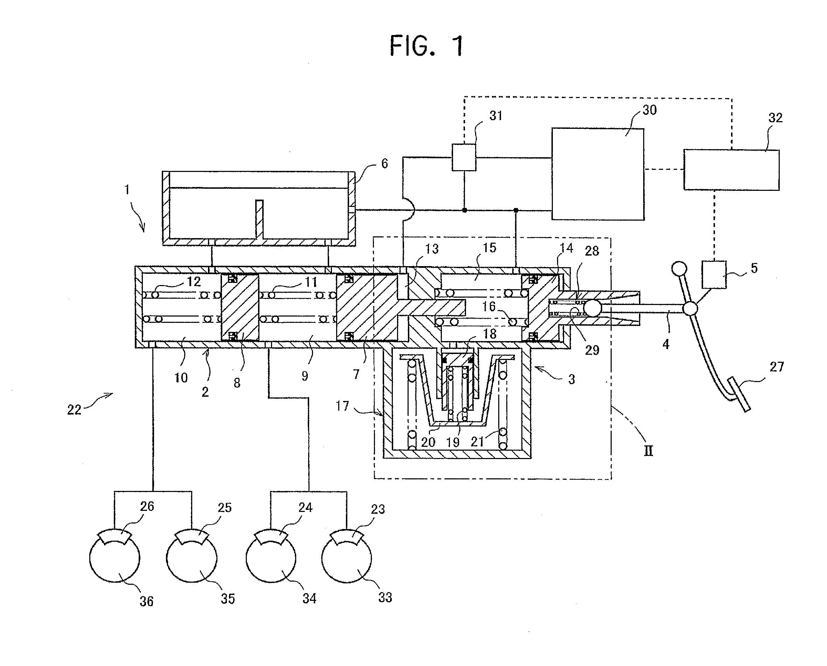

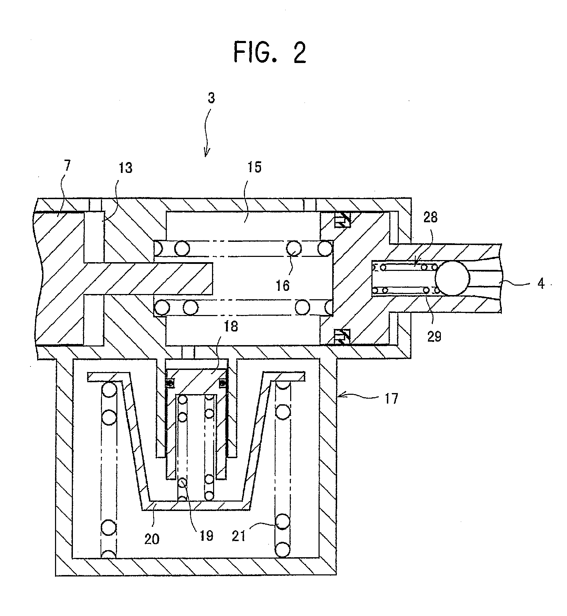

FIG. 1 is a drawing schematically showing a master cylinder having an example of an embodiment of a stroke simulator pertaining to the present invention and a brake system using this master cylinder. Further, FIG. 2 is a partially enlarged view of section II in FIG. 1. Detailed description of constituent elements of the present invention that are the same as the constituent elements of the master cylinder having the stroke simulator shown in FIG. 4 described above will be omitted by assigning the same reference signs thereto.

As shown in FIG. 1 and FIG. 2, the master cylinder 1 is used in a brake system 22 of this example. In the tandem master cylinder unit 2 of this master cylinder 1, the primary hydraulic chamber 9 is communicatively connected to brake cylinders 23 and 24 of one system, and the secondary hydraulic chamber 10 is communicatively connected to brake cylinders 25 and 26 of another system.

Further, a brake pedal 27 is coupled to the input shaft 4. When the driver depresses the brake pedal 27, the input shaft 4 moves forward.

Moreover, the pedal feel simulator unit 3, which is a stroke simulator of the master cylinder 1, has a start-up load reducing unit 28 (which corresponds to an actuation commencement load reducing unit of the present invention) that reduces the actuation commencement load when actuation of the input shaft 4 commences. This start-up load reducing unit 28 has a start-up load reducing spring 29 that is a coil spring of an elastic member, and this start-up load reducing spring 29 is disposed between the input shaft 4 and the simulator actuation piston 14. The elastic modulus of this start-up load reducing spring 29 is set smaller than the elastic modulus of the simulator actuation piston return spring 16. Consequently, when the start-up load reducing spring 29 is pressed by the input shaft 4, the start-up load reducing spring 29 starts to elastically flex before the simulator actuation piston return spring 16 elastically flexes and the simulator actuation piston 14 starts to move forward. Additionally, when the start-up load reducing spring 29 bottoms (in other words, when the start-up load reducing spring 29 maximally flexes and the flexing of the start-up load reducing spring 29 ends), essentially the simulator actuation piston return spring 16 elastically flexes and the simulator actuation piston 14 starts to move forward.

Because the start-up load reducing spring 29 starts to flex before the simulator actuation piston 14 starts to move forward in this way, the start-up load (actuation commencement load) of the pedal feel simulator unit 3 is reduced lower than the start-up load (actuation commencement load) of the conventional pedal feel simulator unit 3 shown in FIG. 4.

This will be explained using a pedal feel characteristic diagram of the pedal feel simulator unit 3 (a characteristic diagram of the reaction force with respect to the stroke of the brake pedal 27). As shown in FIG. 5(c), the pedal feel simulator unit 3 starts up as a result of the start-up load reducing spring 29, whose elastic modulus is smaller than the elastic modulus of the simulator actuation piston return spring 16, elastically flexing first. The force at which the start-up load reducing spring 29 starts to flex is F3, which is smaller than the force F1 at which the simulator actuation piston return spring 16 starts to flex (F1>F3). That is, the start-up load of the pedal feel simulator unit 3 of this example becomes F3 and is smaller than the start-up load of the conventional pedal feel simulator unit 3.

As shown in FIG. 5(c), in the pedal feel simulator unit 3, a bottoming position α of the start-up load reducing spring 29 is set before the first and second reaction force simulator springs 19 and 21 both essentially flex. Further, in a case where the bottoming position α of the start-up load reducing spring 29 is set after the first and second reaction force simulator springs 19 and 21 have both essentially flexed, an actuation commencement load F4 of the first and second reaction force simulator springs 19 and 21 becomes the characteristic diagram shown in FIG. 5(d).

As shown in FIG. 1, the brake system 22 of this example is further equipped with a power source 30, an electromagnetic switching valve 31, and a control unit (ECU) 32. The power source 30 supplies hydraulic fluid to the power chamber 13. The electromagnetic switching valve 31 selectively switches the power chamber 13 to be communicatively connected to either one of the reservoir tank 6 and the power source 30. In that case, during non-actuation of the brake system 22 where the brake pedal 27 is not depressed, the electromagnetic switching valve 31 is not actuated, cuts off the power chamber 13 from the power source 30, and communicatively connects the power chamber 13 to the reservoir tank 6. Further, during actuation of the brake system 22 where the brake pedal 27 has been depressed, the electromagnetic switching valve 31 is actuated, cuts off the power chamber 13 from the reservoir tank 6, and communicatively connects the power chamber 13 to the power source 30.

The control unit (ECU) 32 drives the power source 30 and also switch-actuates the electromagnetic switching valve 31 using the detection signal of the stroke of the input shaft 4 from the stroke sensor 5 when the brake pedal 27 is depressed. Because of this, the power chamber 13 becomes cut off from the reservoir tank 6 and communicatively connected to the power source 30, and the hydraulic fluid is supplied from the power source 30 to the power chamber 13. In that case, the control unit (ECU) 32 computes the hydraulic pressure corresponding to the braking force resulting from the friction brakes in the same way as described above on the basis of the stroke of the input shaft 4 (in other words, the amount the brake pedal 27 is depressed), and the hydraulic pressure in the power chamber 13 is controlled to the computed hydraulic pressure. Because of the hydraulic pressure in the power chamber 13, the primary piston 7 is actuated such that brake hydraulic pressure based on the amount the brake pedal 27 is depressed is generated in the primary hydraulic chamber 9, and the secondary piston 8 is actuated such that brake hydraulic pressure based on the amount the brake pedal 27 is depressed is generated in the secondary hydraulic chamber 10. These brake hydraulic pressures are supplied to the corresponding brake cylinders 23, 24, 25, and 26, and brakes are applied to wheels 33, 34, 35, and 36.

Further, when the brake pedal 27 is released, the control unit (ECU) 32 stops the power source 30 and also switch-actuates the electromagnetic switching valve 31 using the detection signal of the stroke of the input shaft 4 from the stroke sensor 5. Because of this, the power chamber 13 becomes cut off from the power source 30 and communicatively connected to the reservoir tank 6, and the hydraulic fluid inside the power chamber 13 becomes discharged to the reservoir tank 6. When this happens, the primary piston 7 and the secondary piston 8 both move to the non-actuated positions shown in FIG. 1, the primary hydraulic chamber 9 and the secondary hydraulic chamber 10 both become communicatively connected to the reservoir tank 6, and the hydraulic pressures inside the primary hydraulic chamber 9 and the secondary hydraulic chamber 10 become atmospheric pressure. Consequently, the braking of the wheels 33, 34, 35 and 36 is released.

Other configurations and other action and effects of the master cylinder 1 and pedal feel simulator unit 3 of this example are the same as those of the master cylinder 1 and pedal feel simulator unit 3 shown in FIG. 4 described above (in other words, the master cylinder having the pedal feel simulator described in PTL 1). Further, other configurations and other action and effects of the brake system from the tandem master cylinder unit 2 to the brake cylinders 23, 24, 25, and 26 are the same as those of a conventionally well-known, typical brake system from the tandem master cylinder to the brake cylinders.

According to the pedal feel simulator unit 3 of this example and the master cylinder 1 and brake system 22 having the pedal feel simulator unit 3, the start-up load reducing unit 28 having the start-up load reducing spring 29 is disposed. Consequently, because of this start-up load reducing unit 28, the start-up load of the pedal feel simulator unit 3 can be reduced lower than the start-up load of the conventional pedal feel simulator unit 3 shown in FIG. 4. Because of this, it becomes possible to smoothly start up the pedal feel simulation function resulting from the pedal feel simulator unit 3.

Further, the elastic modulus or default load of the start-up load reducing spring 29 can be arbitrarily set within a range smaller than that of the elastic modulus or default load of the simulator actuation piston return spring 16. Because of this, it becomes possible to arbitrarily set the start-up load of the pedal feel simulator unit 3. In particular, by setting the default load of the start-up load reducing spring 29 to 0 (in other words, by setting the start-up load reducing spring 29 to its free length when the pedal feel simulator unit 3 is not actuated), it becomes possible to start up the pedal feel simulator unit 3 from the point at which the start-up load is 0.

Moreover, by using in the brake system 22 the master cylinder 1 having the pedal feel simulator unit 3 that can smoothly start up the stroke simulation function, the braking operation of the vehicle can be performed with a good feeling.

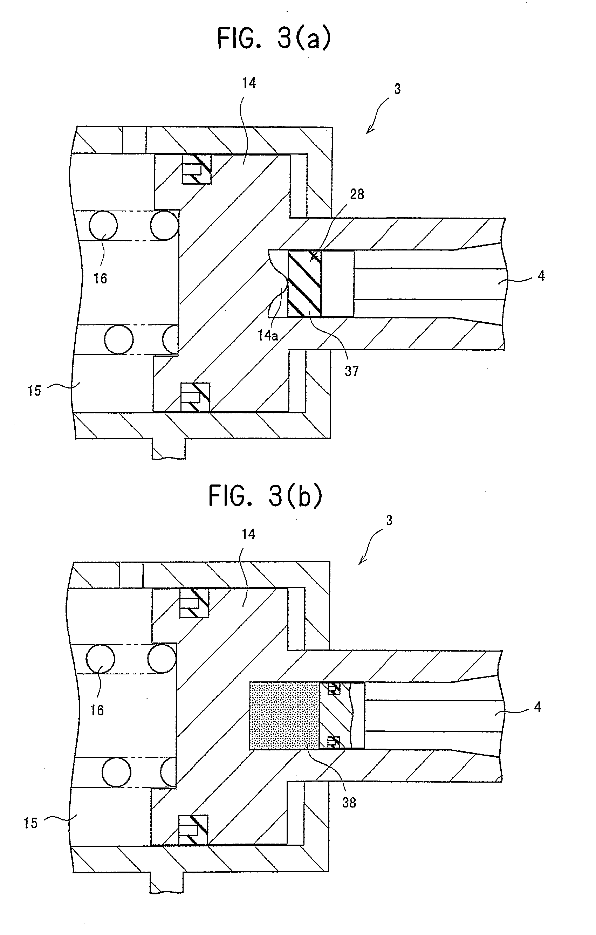

FIG. 3(a) is a partially enlarged view showing another example of the embodiment of the stroke simulator pertaining to the present invention, and FIG. 3 (b) is a partially enlarged view showing yet another example of the embodiment of the stroke simulator pertaining to the present invention.

In the example shown in FIG. 1 and FIG. 2, the start-up load reducing unit 28 of the pedal feel simulator unit 3 has the start-up load reducing spring 29, but in the example shown in FIG. 3(a), the start-up load reducing unit 28 of the pedal feel simulator unit 3 that is the stroke simulator has a rubber plate 37 whose hardness is relatively low instead of a spring. In that case, the rubber plate 37 is positioned between the input shaft 4 and the simulator actuation piston 14 and is attached to the input shaft 4. This rubber plate 37 is an elastic member, and its elastic modulus is smaller than the elastic modulus of the simulator actuation piston return spring 16. Further, a projection 14a is disposed on the simulator actuation piston 14 in opposition to the rubber plate 37. Additionally, when the input shaft 4 moves forward, the rubber plate 37 comes into contact with the projection 14a and elastically flexes before the simulator actuation piston 14 moves.

Other configurations and other action and effects of the master cylinder 1 and pedal feel simulator unit 3 of this example are the same as those of the master cylinder 1 and pedal feel simulator unit 3 shown in FIG. 1 and FIG. 2 described above. Further, other configurations and other action and effects of the brake system from the tandem master cylinder unit 2 to the brake cylinders 23, 24, 25, and 26 are the same as those of a conventionally well-known, typical brake system from the tandem master cylinder to the brake cylinders.

Further, in the example shown in FIG. 3 (b), in the start-up load reducing unit 28 of the pedal feel simulator unit 3 that is the stroke simulator, a gas 38 of a predetermined pressure functioning as an elastic member is sealed between the input shaft 4 and the simulator actuation piston 14 instead of a spring. Additionally, when the input shaft 4 moves forward, the gas 38 becomes elastically compressed (compressively deformed) before the simulator actuation piston 14 moves.

Other configurations and other action and effects of the master cylinder 1 and pedal feel simulator unit 3 of this example are the same as those of the master cylinder 1 and pedal feel simulator unit 3 shown in FIG. 1 and FIG. 2 described above. Further, other configurations and other action and effects of the brake system from the tandem master cylinder unit 2 to the brake cylinders 23, 24, 25, and 26 are the same as those of a conventionally well-known, typical brake system from the tandem master cylinder to the brake cylinders. A gas cartridge in which a gas is sealed in a bag-like container capable of elastic deformation can also be formed, and this gas cartridge can be disposed between the input shaft 4 and the simulator actuation piston 14.

The present invention is not limited to the examples described above and can be applied to any stroke simulator provided that it is a stroke simulator where the start-up load reducing unit 28 of the pedal feel simulator unit 3 is actuated before the simulator actuation piston 14 moves forward. The point is that the present invention described in the claims is capable of a variety of design changes in the scope of the matters.

### Industrial Applicability

The stroke simulator, master cylinder, and brake system pertaining to the present invention are suitably utilizable for a stroke simulator that generates a reaction force simulated in accordance with the depression of a pedal, a master cylinder having this stroke simulator, and a brake system using this master cylinder.

## Claims

1. A stroke simulator comprising:
an input shaft that is actuated as a result of an input being applied thereto;
a simulator actuation piston that is actuated by the input shaft;
a simulator actuation piston return spring that biases the simulator actuation piston in the direction of a non-actuated position;
a reaction force simulator member that outputs a reaction force based on the input of the input shaft to the simulator actuation piston because of the actuation of the simulator actuation piston; and
an actuation commencement load reducing unit that reduces an actuation commencement load at which actuation of the input shaft commences.

2. The stroke simulator according to claim 1, wherein the actuation commencement load reducing unit is disposed between the input shaft and the simulator actuation piston.

3. The stroke simulator according to claim 1 or 2, wherein the actuation commencement load reducing unit has an elastic member whose elastic modulus is smaller than the elastic modulus of the simulator actuation piston return spring.

4. The stroke simulator according to claim 3, wherein the elastic member is an actuation commencement load reducing spring comprising a coil spring.

5. The stroke simulator according to claim 3, wherein the elastic member is a rubber member.

6. The stroke simulator according to claim 3, wherein the elastic member is a gas sealed between the input shaft and the simulator actuation piston.

7. The stroke simulator according to any one of claims 1 to 6, further comprising a simulator actuation hydraulic chamber in which simulator actuation hydraulic pressure is generated by the actuation of the simulator actuation piston, wherein the reaction force simulator member has a reaction force simulator piston that is actuated as a result of the simulator actuation hydraulic pressure in the simulator actuation hydraulic chamber acting thereon and a reaction force simulator spring that is pressed by the reaction force simulator piston, flexes, and generates a reaction force.

8. A master cylinder comprising a stroke simulator that outputs a reaction force based on an input of an input shaft and a master cylinder piston that generates hydraulic pressure based on the input of the input shaft, wherein the stroke simulator is the stroke simulator according to any one of claims 1 to 7.

9. A brake system comprising a brake pedal, a master cylinder that is actuated upon depression of the brake pedal and generates brake hydraulic pressure based on the depression of the brake pedal, and a brake cylinder that generates a braking force using the brake hydraulic pressure generated by the master cylinder, wherein the master cylinder is the master cylinder according to claim 8.
